# EUROPEAN PATENT SPECIFICATION

(11) **EP 2 457 982 B1**
(45) Date of publication and mention of the grant of the patent: **21.01.2015**
(21) Application number: 11190563.4
(22) Date of filing: 24.11.2011
(51) Int. Cl.: C10L 3/10

(54) **Method for the treatment of biogas**
Verfahren zur Bearbeitung von Biogas
Procédé pour le traitement de biogaz

(30) Priority: 25.11.2010 GB 201020045
(43) Date of publication of application: 30.05.2012
(73) Proprietor: Viridor Waste Management Limited, Exeter Devon EX2 7HR (GB)
(72) Inventor: Morrish, Ian, Yeldon, Bedfordshire MK44 1JH (GB); Turner, Richard, Exeter EX2 7HR (GB)
(74) Representative: Jacob, Reuben Ellis

(56) References cited:
- EP-A1- 0 531 620
- AU-A1- 2010 212 526
- DE-C- 517 351
- RO-B1- 97 283
- US-A- 3 579 293
- GALE ET AL: "Mechanisms governing the fate of mercury in coal-fired power systems", FUEL PROCESSING TECHNOLOGY, ELSEVIER BV, NL, vol. 89, no. 2, 24 October 2007 (2007-10-24), pages 139-151, XP022432424, ISSN: 0378-3820, DOI: 10.1016/J.FUPROC.2007.08.004

## Description

The invention relates generally to treating biogas and more specifically to cleaning biogas using fly ash.

Biogas is a gas produced from the biological decomposition of organic matter in the absence of oxygen, i.e. anaerobic decomposition. Landfill gas (LFG) is the most well known biogas where LFG is a by-product of the degradation of domestic and/or commercial-industrial waste by anaerobic microbes. However biogas is also produced from 'in-vessel' Anaerobic Digestion (AD) which can use the biodegradable fraction from domestic and/or commercial-industrial waste or source separated food waste or even farm waste.

Biogas is considered to be both hazardous (because of its explosive nature and because of the potential pollution of air) and a potent greenhouse gas. The composition of biogas varies depending on the nature of the biodegradable materials used in the decomposition process but methane is usually the main component, which makes biogas a valuable fuel for the production of renewable energy. There are therefore clear environmental and economical advantages in the capture and utilisation of biogas.

The methane content in biogas can be as high as about 75% but is generally in the range of 50% to 60%, the remainder being mostly carbon dioxide and nitrogen. Biogas can also contain many trace contaminants. In monitoring trace components of LFG at a large number of UK landfill sites currently receiving waste, it has been observed that certain trace gas concentrations are increasing, sometimes rapidly. These notably include siloxanes, organo-chlorine and organo-fluorine compounds and hydrogen sulphide which can cause considerable damage to biogas utilisation equipment such the gas engines used for generating renewable energy. These compounds are also present at significant levels in other forms of biogas.

Siloxanes are formed from the anaerobic breakdown of materials commonly found in soaps and detergents. During combustion of biogas containing siloxanes, silicon is released and can combine with free oxygen or various other elements in the combustion gas. White mineral deposits are formed containing mostly silica or silicates and can also contain calcium, sulphur, zinc and phosphorus. Such deposits accumulate to a thickness of several millimetres on the surface of the landfill gas engines and must be removed by chemical or mechanical means.

Known methods to remove contaminants from biogas use for example activated carbon and activated alumina. These methods are particularly efficient for the removal of siloxanes from biogas but involve high costs because activated carbon and activated alumina must be bought from a supplier or specifically prepared from raw material.

There is therefore a need for a method for removing trace contaminants from biogas. More specifically, there is a need for an environmentally-friendly and cost-effective method for cleaning biogas.

A major by-product from the incineration of domestic and / or commercial-industrial waste in an Energy from Waste (EfW) plant is ash. Incinerator Bottom Ash (IBA) is the non-combustible content of waste that is left at the bottom of the incinerator after combustion. "Fly ash" consists of the fine, airborne particles of ash that usually fly out of the incinerator along with flue gases and is collected by the Air Pollution Control (APC) system that is used to clean the flue gases before emission to atmosphere, thus forming APC Residue (APCr). The terms 'Fly Ash' and 'APCr' are often interchangeable. IBA and fly ash are waste products in EfW plants and are produced in large quantities such that their disposal is becoming a serious problem.

Preferably, Air Pollution Control (APC) equipment is utilised to remove fly ash from flue gas prior to discharge to atmosphere to ensure compliance with operating permits. In its simplest form the APC system will comprise one or more filters and/or one or more precipitators that remove particulate matter only. APC for typical Energy from Waste plants (EFW) may also include the addition of reagents that treat or adsorb other species present in the flue gas. Examples of such reagents are Powdered Activated Carbon (PAC) and lime.

A favoured alternative to disposal is recycling or reuse. RO 97283 describes a process for the increasing the rate of production of biogas, by adding neutral furnace ash or crushed insulated brick into sludge to provide a sticky surface for bacteria to adhere to. US 3,579,293 describes a process for the removal of hydrogen sulphide from producer gas, by contacting pellets comprising fly ash and iron oxide with producer gas. EP 0 531 620 describes the separation of pollutants such as hydrochloric acid, hydrofluoric acid, sulphur oxides, nitrogen oxides, carbon monoxide, fly ash and hydrogen sulphide from flue gas.

IBA can be used for road construction or in the manufacture of construction blocks and cement. However, fly ash is eco-toxic because it contains metals, such as aluminium, iron, manganese, calcium, titanium and magnesium, which can leach into the soil and needs to be treated before use in this way. Fly ash also contains residues of the chemicals used in the APC such as lime and activated carbon. Several methods have been proposed to recover metals from ash but again these recovery processes are costly. Fly ash is disposed as a hazardous waste.

There is therefore a need for a method for re-using fly ash produced as a by-product of incineration in an EfW plant. More specifically, there is a need for an environmentally-friendly and cost-effective method for re-using fly ash.

The present invention aims to mitigate the above mentioned and associated problems by providing a method for removing trace contaminants from biogas using fly ash as a cleaning reagent.

According to a first aspect of the invention, there is provided the use of fly ash for the removal of siloxanes from biogas. The chemical properties of the fly ash and the unused elements (residue) of the APC system react with organic trace components in biogas. Therefore, contaminants such as siloxanes, organo-chlorine and organo-fluorine compounds and hydrogen sulphide are removed from biogas and purified biogas is obtained. At the same time, fly ash is rendered less eco-toxic in that the trace contaminants of biogas occupy the metals active sites of fly ash and fly ash becomes less susceptible to metal leaching. Thus, fly ash, which is currently considered a hazardous material, can be regarded as non-hazardous and therefore successfully recycled for the preparation of for example soil conditioners or aggregates for road works, cement or concrete or other building materials.

Preferably, the fly ash is in the form of granules. Fly ash in its raw form is a fine powder which can be processed in the form of granules or pellets that are more conducive to biogas flow.

The granules may be prepared by dry compacting fly ash, preferably at a high pressure. Granules or pellets made by dry compacting ash provide a good balance between having a suitable biogas flow and maintaining the fly ash reaction surface area.

The fly ash may be in a granular form. Preferably, the granules have an average diameter of from 0.5 mm to 50 mm.

The invention will be further described with reference to the drawings and figures, in which
figure 1 is a block diagram illustrating a method according to the invention;
figure 2 is a diagram showing the organic Cl, F, S and Si removal efficiency with time (six days at 400mL/min);
figure 3 is a diagram of the experimental set up;
figure 4 is a photograph of the cartridge set up;
figure 5 is a photograph of fly ash before use and after use;
figure 6 is a diagram of the sampling set up;figure 7 is a plot of organic Cl, F, and Si concentrations against time (first 4 hours);
figure 8 is a plot of organic Cl, F, and Si concentrations against time (over 6 days); and
figure 9 is a plot of hydrogen sulphide concentrations with time (over 6 days).

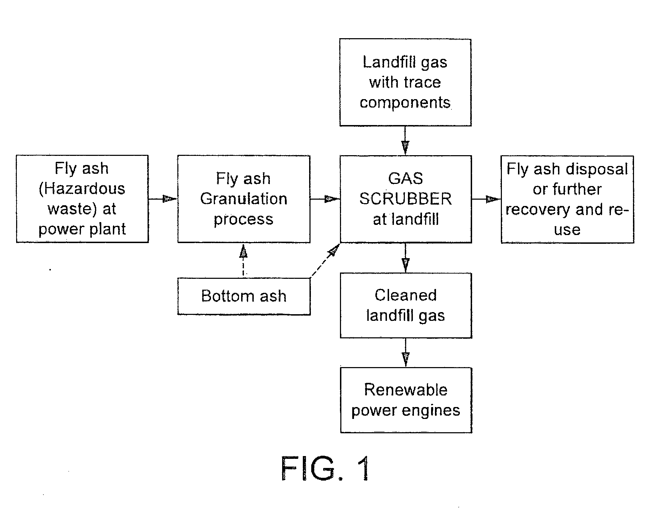

With reference to Figure 1, the present invention is advantageous for the treatment of two products arising from the production of energy from landfill waste: the first product is potentially eco-toxic fly ash and the second biogas contaminated with organic trace components.

Fly ash is produced at an increasing number of "energy-from-waste" plants. It currently represents a considerable burden to operators of such plant because it has to be disposed of as hazardous waste. Fly ash is usually solidified while suspended in the exhaust or flue gases and hazardous waste. Fly ash is usually solidified while suspended in the exhaust or flue gases and is collected by electrostatic precipitators or filter bags. Since the particles solidify while suspended in the flue gases, fly ash particles are generally spherical in shape with an average diameter of from 0.5 µm to 100 µm.

Fly ash contains many products of complete and incomplete combustion such as acid gases, vaporised and volatilised heavy metals and many other complex organic and inorganic compounds including organic carbon. It consists mostly of silicon dioxide, aluminium oxide and iron oxide. In ASTM C 618-85 ("Standard specification for fly ash and raw calcinated natural pozzolan for use as a mineral admixture in Portland cement concrete") fly ash is classified into two classes, Class C and Class F, based on its chemical composition. Class F contains more than 70% of the above oxides and Class C contains less than 70% but more than 50%. Class F fly ash is typically low in calcium oxide (<8%) whereas Class C has a higher content being sub-classified in two categories: Class Cl (8-20% CaO) and Class CH (>20% CaO).

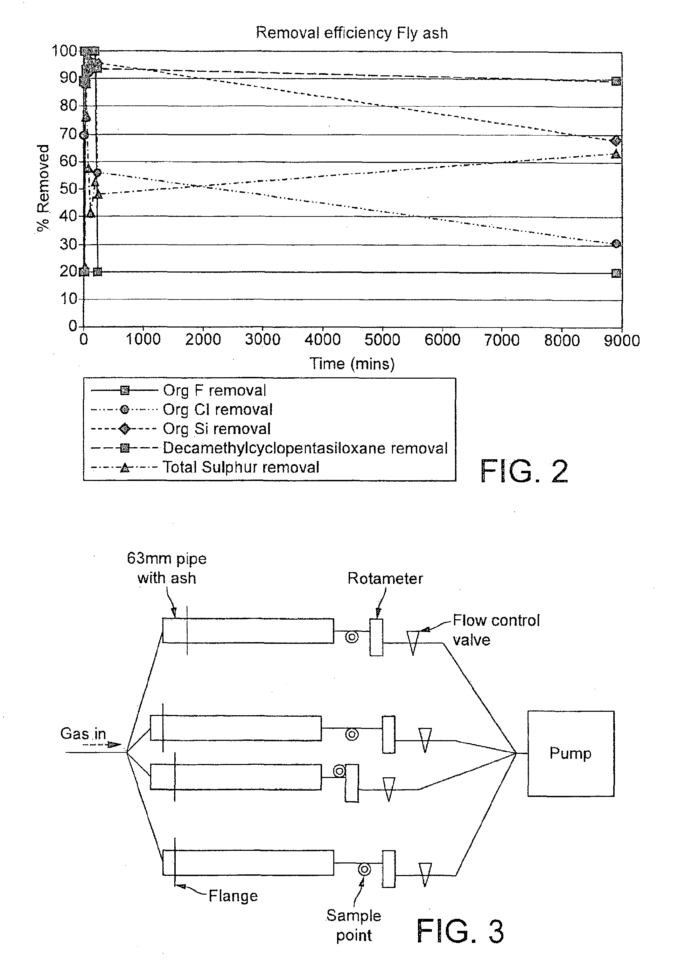

The very fine particles of fly ash have a large number of sorption and reaction sites capable of adsorbing and/or absorbing trace components contaminating landfill gas. As shown in figure 2, it is particularly good at removing siloxane compounds, although organic chloride compounds and petroleum hydrocarbons are also efficiently removed. Fly ash is also reasonably efficient at removing hydrogen sulphide.

In its raw form, fly ash is a fine powder which can form a matrix through which the flow of biogas is passed. However, the very fine particles are not conducive to gas flow and the differential pressures required to maintain flow through the ash are relatively high. Therefore, preferably, the fly ash is in the form of granules or pellets. Converting the fly ash into a granules or pellets allows biogas to flow past the metal active sites in the ash without too great a loss in flow efficiency. Granules or pellets may be prepared by compacting or compressing fly ash.

A most preferred embodiment uses high pressure compaction technology and comprises a step of dry compacting the fly ash powder at high pressure, wherein fly ash is change into a form where biogas can be easily induced without losing the surface area for reaction and sorption.

Preferably, the fly ash is compacted in the absence of additives because it is thought that the presence of additives might hinder the access to the reaction sites of the fly ash and affect the cleaning efficiency. However, the granulation of the fly ash may be improved by adding a binder to the fly ash before compaction. Preferably, the granules have an average diameter of from 0.5 mm to 50 mm.

It has also been found that the combination of IBA with fly ash was particularly beneficial in the treatment of biogas. IBA may be used as an additive to remove carbon dioxide and hydrogen sulphide from biogas. It can be added to the fly ash granules or used sequentially in the biogas purification treatment.

The composition of IBA, and therefore its properties, is very different from that of fly ash. IBA also results from the combustion of waste but is gathered at the bottom of the incinerator. Leachate problems are associated with IBA in that metals present in the leachate become fixed to the IBA in the incinerator.

Fly ash may also be used together with or sequentially to a filter media comprising calcium oxide to increase its hydrogen sulphide removal ability.

Fly ash is currently classified as "hazardous waste". However, its use as a biogas cleaner or scrubber may recover the material from the waste management regime. This removal from the waste regime could be temporary until the ash had been used to scrub biogas, or it could be permanent if the used ash is then further used as a product, such as an aggregate, cement, road base or other product.

When fly ash is exposed to LFG, the metals in the ash react with trace components in the gas and become less likely to be leached. For example, it has been observed that the leaching characteristics of zinc changes the most on exposure to LFG, with copper and lead showing small leaching differences.

If the metal compound formed is not eco-toxic in the concentrations present, then the fly ash may become non-hazardous waste if it subsequently requires disposal or it may become a useful environmentally-friendly product in view of its reduced leachability.

It has therefore been demonstrated that the inventive process uses a hazardous waste material, i.e. fly ash, to efficiently remove organic trace components from LFG. The removal of these trace components, in particular siloxanes, prevents silica deposits from corroding the insides of engines. Biogas is purified at minimum cost, while the contacted fly ash is rendered less eco-toxic and therefore usable as a product, e.g. as a soil conditioner, or in the manufacture of construction blocks and cement.

### EXPERIMENTAL DATA

Experiments were set up to determine the capacity of the fly ash to remove siloxanes and other trace gases from LFG. In addition, the research looked at stabilisation of the fly ash with respect to leachable metals.

The very fine particles of fly ash have a large number of sorption/reaction sites, and these react with trace components of LFG. Fly ash is particularly good at removing siloxanes although organic chloride compounds and petroleum hydrocarbons are also removed. Somewhat surprisingly, the fly ash is reasonably efficient at scrubbing hydrogen sulphide. Of the metals, the leaching characteristics of zinc changes the most on exposure to LFG, with copper and lead showing small leaching differences after the trial.

### Experimental set up

A diagram of the experimental set up is shown in figure 3. A small scale apparatus that allows accurate control of gas flow rate and monitoring of removal efficiency was used. Off-gas was tested at regular intervals and the experiment was run for 7 days. The ash was also tested for physical, chemical and leachability properties.

The cartridges were made of 63mm MDPE with 0.5 m of length that can be packed with ash. A flange in the cartridge allows the loading of ash. Pipe reducers at each end allow the cartridges to be connected to the Teflon sample tubing used to connect up the experiment. The 63mm pipe used as a cartridge has an internal radius of about 0.025m. Cross sectional area is 3.14 x 0.025m x 0.025m = 0.002m².

Assuming porosity of about 60% but only 20% interconnected porosity, there is only about 0.0004m² of effective cross sectional area for gas flow. Assuming 0.1L.min⁻¹ or 1.67 x 10⁻⁶m³.sec⁻¹, then flow velocity is 0.0043m.sec⁻¹. A 0.5 m length cartridge gives a residence time of about 120 seconds. This flow rate has been found to be more than adequate to allow efficient removal of hydrogen sulphide by bottom ash. To test the ability of fly ash to sorb trace components might be different so other flow rates were also tested. The flow rates through the five cartridges were set up to be:
- 0.1L.min⁻¹, i.e. a residence time of 120 seconds.
- 0.2L.min⁻¹, i.e. a residence time of 60 seconds.
- 0.4L.min⁻¹, i.e. a residence time of 30 seconds.
- 0.5L.min⁻¹, i.e. a residence time of 24 seconds.

The residence time will be an 'average'. With a relatively high porosity, there is a large distribution of residence times, with some gas taking a long time to pass through the filter via a tortuous path and some gas taking the shortest possible direct route.

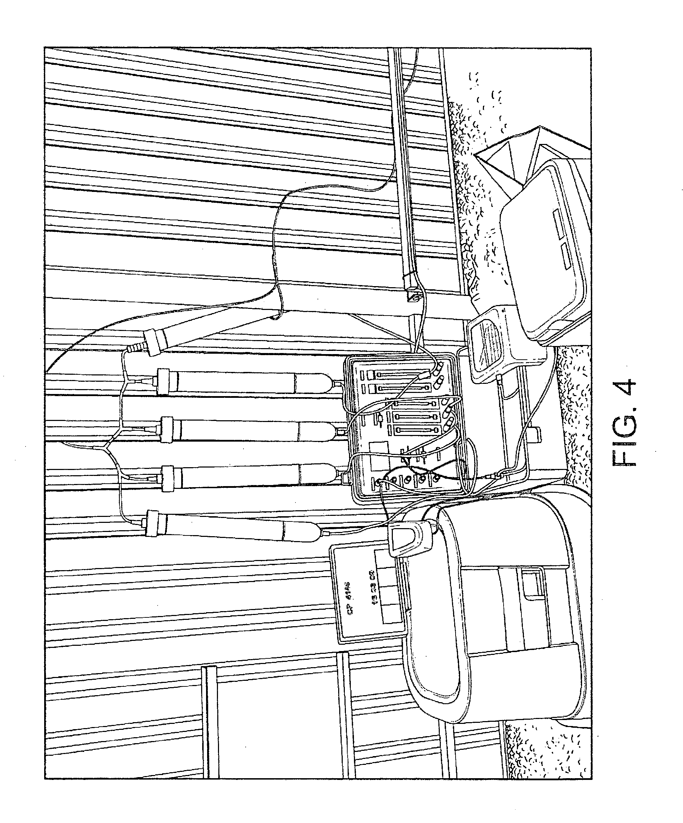

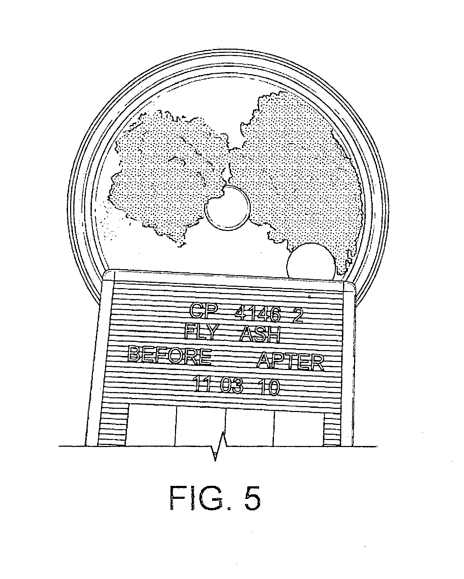

In figure 4, gas enters the ash-filled vessel from the top. There is a mesh blanket at the bottom to prevent the ash from clogging the outlet and contaminating the rotameters. The gas from each particular cartridge passed through a dedicated rotameter and flow control valve. After this, the gas passed through the pump and was returned to the on-site gas control system before the blowers. The total volume of ash used was: Cross sectional area (3.14 x 0.025m x 0.025m) x Depth of ash (0.5m) = 0.001 m³. The gas collection system required no modification, with gas taken from one gas tap on the suction side of the system and returned to the pipeline a few metres closer to the blowers i.e., two gas taps relatively close to each other was all that was required for this test set up. The fly ash is much finer and uniform in grain size than bottom ash samples. It is also much drier than other ash samples. It was not wetted because adding water might diminish permeability and porosity further. A photo of the fly ash (before use on the left hand side and after use on the right hand side) is shown in figure 5.

### Methodology

There were two ash sampling events during the trial. The trial was run for six days. Before and after the trial, samples of ash were taken. During the first day of the trial and at the end of the trial, the gas was sampled into Tedlar© bags. Sampling and analytical regimes are described in the following sections.

### Ash Sampling and Analysis

Ash was collected the day before the trial from the plant. It was double bagged and sealed for transport. Samples of ash were taken prior to the trial and analysed for the following analytes:

**Table 1: Ash analytical suite**

| Analyte | |
|---|---|
| Moisture | |
| Aluminium, Iron | Sulphide |
| Arsenic, Copper, Lead, Nickel, Zinc | Total sulphur |
| Fraction of organic carbon (FOC) | Porosity |
| Carbonate | Permeability |
| Sulphate (acid soluble) | Particle Size Distribution |

**Table 2: Ash leachate analytical suite**

| Analyte |
|---|
| 2 Stage leachate preparation BS EN 12457-3 LS 2 - 10 two stage |
| Aluminium, Iron, Arsenic, Copper, Lead, Nickel, Zinc |

Once the ash had been used for 7 days, a further sample of used fly ash was analysed. There was enough ash for one porosity/permeability test and one 'after' analysis of the ash and leachate.

### Field Methodology for quantifying trace components of landfill gas

The methodology has been designed with reference to Environment Agency Guidance LFTGN04 'Guidance for monitoring trace components in landfill gas'. This method statement is a summary of C&P Environmental Ltd's full method statement.

### Equipment

- Gas taps and valve fittings;
- Condensate Knock Out Pot (if required);
- Tygon Tubing;
- 6 mm OD semi-rigid PTFE Tubing;
- GA2000 Multi Gas Analyser (field-measurement of bulk gas concentrations and differential pressure);
- DiaVac Hi-Vac Sampling Pumps;
- Vacuum box;
- Tedlar© bags;
- Disposable paper towels;
- Black bin liners;
- Data Record Sheets; and,
- Suitable tools for field work (cutting tubing, opening sample tubes etc.).

### Initial Data Recording

Prior to the start of each sampling event the following information is recorded on the data record sheet (copy attached):
- Site ID;
- Sample location and ID;
- Date and time;
- Equipment serial numbers;
- Equipment calibration/functionality check results;
- Sample container details -Tedlar© Bag ID's;
- Sample point inspection details - is the sample point secure, if a monitoring well, how deep is the well installed, is the ground around the annulus compacted down;
- Ambient gas conditions and temperature; and
- Barometric pressure.

### Purging and pre sample data recording

- A functioning control valve must be fitted to the protruding PTFE sample line.
- The sample line of the GA2000 is attached to the PTFE sample line.
- The gas tap is opened, the internal pump of the GA2000 turned on and the time recorded.
- The gas concentrations and temperature displayed by the GA2000 are recorded every 60 seconds.
   Note: All of the gases the GA2000 detects (02, CO2, CH4, CO, and H2S) are monitored although they may not be regarded as compounds of interest.
   Note: The hydrogen sulphide reading is adequate for trace gas monitoring.
- When the readings have stabilised (usually within 3 - 4 minutes) the gas tap is closed, the internal pump turned off and the time recorded.

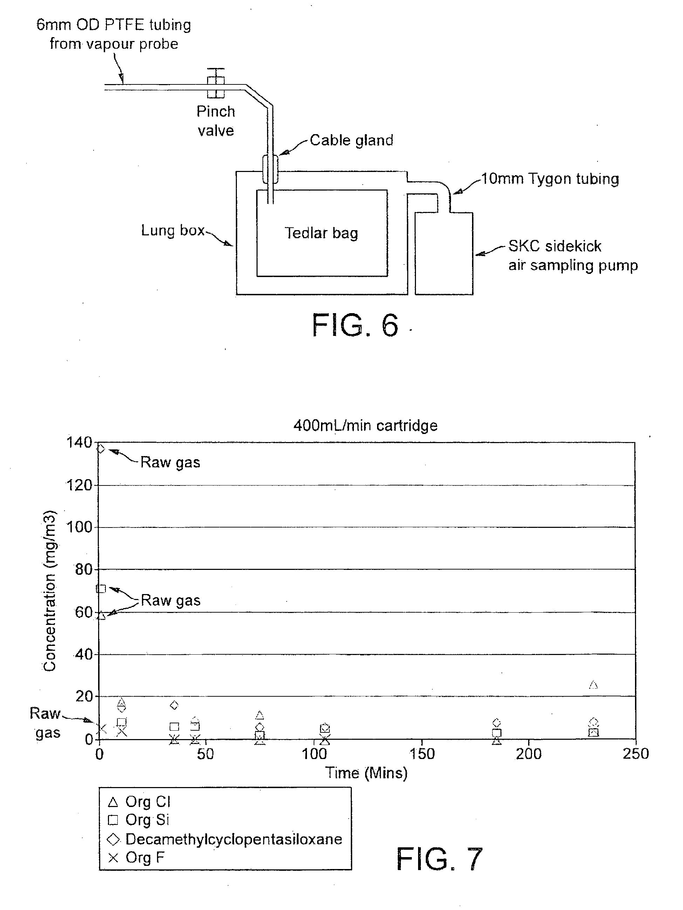

### Sampling (figure 6)

- Pass the PTFE sample line in through the cable gland on the side of the vacuum box.
- Attach the Tedlar© bag to the other end of the PTFE tubing, inside the vacuum box.
- Open the valve on the Tedlar© bag by one turn only.
- Turn the DiaVac pump fitted to the lung box on and then open the gas tap.
- When the Tedlar© bag is full, close the gas tap and then turn the pump off. Close the valve on the Tedlar© bag.
- Attach the Tedlar© bag to the GA2000+, switch on the sample pump and record the gas concentrations.
- Squeeze any remaining gas out of the Tedlar© bag and repeat from number 2 above.

This purge process should be repeated a total of two times.
- Following the purge cycles, fill the Tedlar© bag ¾ full and keep as the sample. The sample bags should be placed in a dark, uniquely labelled cool box or black bin liner, and kept at ambient temperature to reduce the effects of photo-ionisation and condensation.

### Post-sample data recording

- A hydrogen sulphide filter is attached so that more accurate carbon monoxide readings can be taken.
- The GA 2000 is reattached to the sample point, the gas tap opened, the internal pump turned on and the time recorded.
- The gas concentrations and temperature displayed by the GA2000 are recorded every 60 seconds as before for at least 3 minutes (three readings).
- The final ambient gas conditions and barometric pressure are recorded.
- Once the samples are collected, they are transferred to the laboratory for analysis. It is essential that sample analysis be conducted within 48 hours, because after this time compounds may escape or become degraded.

### Gas Sampling and Analysis

The gas sampling regime involved testing the gas at both the inlet and outlet of the filter vessel. Readings were taken as often as possible at the start of the trial and at greater intervals as the trial progressed. Tedlar© bag samples were also taken at time intervals - shorter at the beginning then longer as the trial stabilised. These gas samples were analysed for the following suite of analytes:

**Table 3: Gas analytical suite**

| Analyte | Analytical method |
|---|---|
| Methane | GC (Gas Chromatography) |
| Carbon dioxide | GC |
| Oxygen | GC |
| Nitrogen | GC |
| Trace components | GC-MS (Gas Chromatography - Mass Spectrometry) |
| Hydrogen | GC-MS |
| Hydrogen Sulphide | GC-MS |

Trace components for landfill gas were analysed to determine whether the filter media was effective at removing organic trace components. Hydrogen was added to the analytical schedule to determine whether it was generated in significant quantities during possible hydrogen sulphide removal. The bulk measurements were taken in 3L Tedlar© bags for quantification. The bulk gas, hydrogen, hydrogen sulphide and the majority of trace component analyses are UKAS accredited.

Method statements for the sampling are set out above. After sampling, the Tedlar© bags were stored in a cool box at ambient temperature to prevent condensation and photodegradation losses. The Tedlar© bags were delivered to the laboratory as soon as possible after sampling. The temperature of the gas was monitored before and after the filter using the field meter intermittently during the first five days of the trial to see if any reactions were exothermic or endothermic. Flow was measured using a field rotameters after each cartridge.

### Results and Analysis

### Physical properties of the ash

From figure 5 it can be seen that the fly ash is a fine powder. Also, there was no discernable difference in appearance before and after the trial. The fly ash is bone dry (there is no moisture), which is good for keeping transport costs as low as possible.

### Particle size distribution

The particle size distribution test confirms that the material is made up of 78% clay and silt with 22% sand (duplicate sample 74% clay and silt with 26% sand). This is much finer than any of the bottom ash samples. The small particle size will mean that there is a large surface area to volume ratio of the reactive components.

**Table 4: Ash grain size distribution**

| Sample | % Cobbles | % Gravel | % Sand | % Clay |
|---|---|---|---|---|
| Fly Ash | | | | |
| Ash before - sample 1 | 0 | 0 | 22 | 78 |
| Ash before - sample 2 | 0 | 0 | 26 | 74 |
| **Bottom Ash - Site 1** | | | | |
| Ash before 1 | 0 | 57 | 42 | 1 |
| **Bottom Ash - Site 2** | | | | |
| Ash before 1 | 0 | 78 | 19 | 3 |
| Ash before 2 | 0 | 78 | 18 | 4 |
| **Bottom Ash - Site 3** | | | | |
| Ash before | 0 | 55 | 43 | 2 |
| **Bottom Ash - Site 4** | | | | |
| Ash before | 2 | 83 | 12 | 3 |
| Ash after | 0 | 92 | 6 | 2 |
| **Bottom Ash - Site 5** | | | | |
| Sample A | 1 | 78 | 20 | 1 |
| Sample B | 0 | 74 | 19 | 7 |

Cobble is any particle larger than 63mm; gravel in any particle between 2 and 63 mm; sand is any particle between 0.062mm and 2 mm; Silt and clay is any particle less than 0.062mm.

### Density and porosity

A summary of findings from the samples is presented below in Table 5. In comparison to bottom ash samples, the density is lower, possibly because of a lower metals content, although this is somewhat countered by the high particle density (2.89 Mg.m⁻³). The porosity is very high, as expected for a sample with relatively uniform grain-size, and this is good for a filter matrix because there are lots of open pores for reactions to take place in. However, interconnected porosity is the most important parameter and permeability is the parameter that reflects this.

**Table 5: Ash density, porosity, and moisture content**

| Sample | Bulk Density (Mg.m⁻³) | Porosity (%) | Total moisture (%) |
|---|---|---|---|
| Ash before 1 | 1.11 | 0.6 | 0 |
| Ash before 2 | 1.12 | 0.6 | 0 |

### Permeability

This is confirmed by the falling head permeability test, which after a 2.5kg compaction returned a permeability of 3.7 x 10⁻⁵ m.sec⁻¹, to be similar to that of sand but an order of magnitude lower than values obtained with for example bottom ash.

Porosity and permeability are the key parameters when determining an optimum system because they control the velocity of flow and gas residence time. A flow velocity that is too high will not allow the trace components and other contaminants to adsorb or react onto the ash matrix and breakthrough will occur quickly without the attenuation capacity of the ash being fully used. Residence time is a function of bed depth and velocity of flow, but is crucial to allow the full capacity of the ash to be used. The parameters cannot be controlled or altered once a system is designed.

In its raw state, the small grain size of the fly ash means that there is lots of surface area for reactions/sorption to take place such that the fly ash is efficient at removing trace components of landfill gas and particularly the siloxane component.

The physical properties of the fly ash (very fine particles) mean that it provides strong resistance to gas flow. This is interpreted to be because lots of very small open area channels are being used to transmit the gas. This is good for exposure to lots of particles that can react and sorb with the gas, but expensive in energy costs. If the gas permeability of the fly ash can be modified (e.g. by making into granules) to allow efficiency gas transmission, while maintaining enough active surfaces for reaction/sorption, then the fly ash is a cheap and viable trace scrubbing medium.

In summary, the matrix available for reaction is good because the particles have a large surface area to volume ratio. The pathways through the matrix may be tortuous and overall residence time might be high, but this will be mitigated by the velocity through the limited open channels, which will also be high.

### Trace component scrubbing

### Removal efficiency

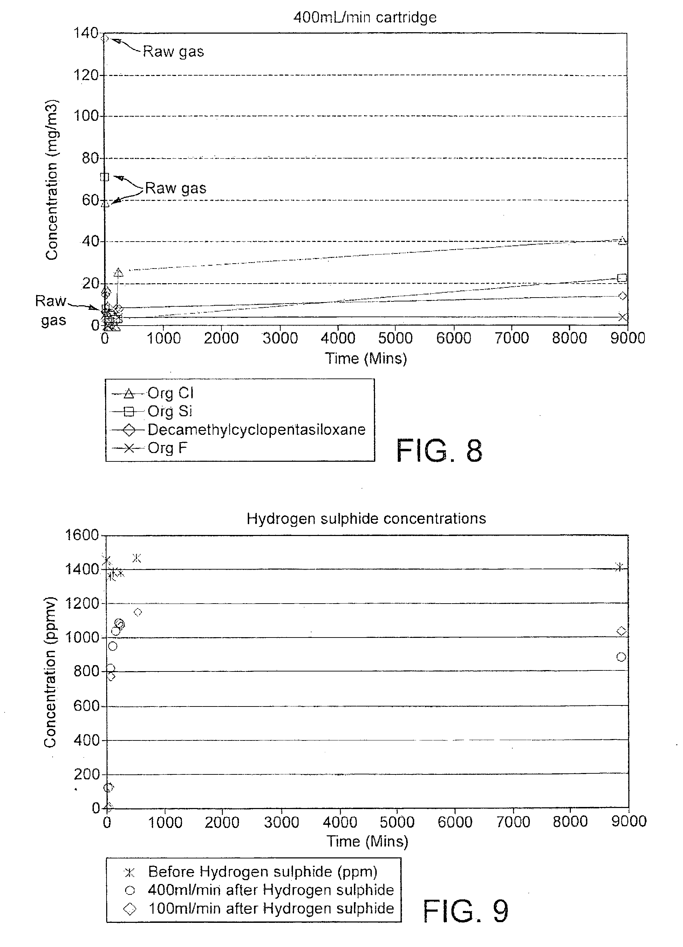

In the following graphs the parameter responses have been summarised by showing organic chloride (Cl) to indicate compounds such as vinyl chloride, dichloromethane and tetrachloroethene found in the raw gas. The siloxanes have been summarised in the organic silica (Si) parameter, although decamethylcyclopentasiloxane has also been shown as the most prevalent siloxane. Organic fluoride (F) has been used to indicate compounds such as the freons found in the raw gas. The effectiveness of the ash is best shown in figures 7 and 8, which plot inlet and outlet concentrations of the parameters described above and figure 2, which shows percentage removal.

Figure 7 is a plot of organic Cl, F, and Si concentrations against time (first 4 hours) and shows that the fly ash starts removing the trace components quickly from the onset. The bulk gas concentrations indicate that the 400ml/min Cartridge took about 15 minutes to become thoroughly flushed with landfill gas, and the Tedlar bag still had 2.6% oxygen, so the first reading is from a gas stream that has not yet stabilised. In the second sample, all the organic chloride and organic fluoride has been removed and most of the siloxanes are also being removed. Not shown on the graph is the fact that all the petroleum hydrocarbon trace components (benzene, xylenes etc) are also being removed.

This removal efficiency is maintained for at least the first four hours, although in the last reading, there is limited breakthrough of organic chloride (dichloromethane and some freons) and organic fluoride (freons). The freon compounds and dichloromethane have a high vapour pressure and prefer being in the vapour phase. It is to be expected that these compounds would be the first to breakthrough. The siloxanes in contrast are not as mobile and have lower affinity to the vapour phase.

Figure 8 is a plot of organic Cl, F, and Si concentrations against time (over 6 days). Although there has been some breakthrough, the fly ash is still scrubbing out a third of the organic chloride, and two thirds of the organic silica (and 90% of the decamethylcyclopentasiloxane). The petroleum hydrocarbons have also 'broken through', but not completely, indicating that some scrubbing capacity remains.

Figure 2 shows the removal efficiency i.e., how much of the original raw gas concentration has been removed. The graph also for the first time shows hydrogen sulphide removal efficiency with time based on laboratory measurements because there is some hydrogen sulphide removal.

As can be seen in the plot of figure 2, the organic fluoride is completely removed in the early time data, but within four hours stabilises at a 20% removal rate. This rate is the same 6 days later. The organic chloride was completely removed for a few hours, but then breakthrough occurred and efficiency went down from 65% to 30% over the following six days. The organic silica removal followed the same trend, but removal efficiency went from 95% to 67% over the next six days. The removal efficiency for the most prevalent siloxane decamethylcyclopentasiloxane remained over 90% for the six day trial. The removal of sulphur (predominantly hydrogen sulphide) initially fell to 20%, but recovered to 50% within 4 hours and increased over the next six days to 65%.

The trace component mass removal rate can be estimated in a number of ways. The flow through each filter was measured, so mass removal can be estimated using the measured concentrations. For example, for decamethylcyclopentasiloxane: using a 400ml/min cartridge about 90% of the 137mg/m³ of decamethylcyclopentasiloxane were removed in 8860 minutes. In 8860 minutes, 3544 L (3.544 m³) of gas were scrubbed. The amount of decamethylcyclopentasiloxane removed was 90% of 137mg/m³ times 3.544 m³ of gas, or 437mg of decamethylcyclopentasiloxane.

### Hydrogen sulphide

Other trials have evaluated the capacity of the ash to remove hydrogen sulphide (H₂S). Referring to figures 2 and 9, after an initial phase when most of the hydrogen sulphide is removed, the removal efficiency rapidly decreases over the first few hours of the trial. Removal efficiency slowly increases over the next six days. It was noted that there is practically no difference in scrubbing performance depending on flow rate (100 or 400 mL/min).

The hydrogen sulphide mass removal rate can be estimated in a number of ways. The flow through each filter was measured, so mass removal can be estimated using the measured concentrations. Using a 400ml/min cartridge, about 50% of the 1400 ppm of hydrogen sulphide were removed in 8860 minutes. In 8860 minutes, 3544 L of gas were scrubbed. Since the fraction of hydrogen sulphide removed was 0.0007, about 2.5 litres of H₂S were removed.

### Hydrogen

**Table 6: Hydrogen concentrations**

| | Hydrogen concentration (ppmv) |
|---|---|
| Raw gas | 295 |
| After cartridge - Time in minutes | |
| 10 | 281 |
| 35 | 172 |
| 45 | 192 |
| 75 | 230 |
| 105 | 281 |
| 185 | 184 |

The first thing to note is that there is 295ppmv hydrogen in the raw gas. In the initial minutes of the trial there actually appears to be less hydrogen in the gas that has been through the cartridges. No hydrogen generation is suggested in contrast when the same experiment is carried out with bottom ash.

### Chemical properties of the ash

### Metals content of the ash

The total metal content in the ash should not change during the trial although arsenic is a trace gas that is present in landfill gas as arsene and may be scrubbed from the gas. The metals all have the potential to react with hydrogen sulphide if present in a reactive form.

The metals data are presented to show the difference in composition between bottom ash and fly ash and to develop a more robust estimate of available metal for scrubbing hydrogen sulphide. The previous ash sample data are also presented in table 7 to aid understanding. Samples were taken before the test and after about 6 days. In bottom ash, the largest proportion of the metals is iron and aluminium followed by copper, and zinc. In fly ash the largest proportion of metal is zinc, followed by aluminium, lead, iron, and copper.

**Table 7: Ash metals content**

| | Aluminium | Arsenic | Copper | Iron | Lead | Nickel | Zinc |
|---|---|---|---|---|---|---|---|
| | mg.kg⁻¹ | mg.kg⁻¹ | mg.kg⁻¹ | mg.kg⁻¹ | mg.kg⁻¹ | mg.kg⁻¹ | mg.kg⁻¹ |
| Fly ash | | | | | | | |
| Before 1 | 2047 | 19 | 364 | 882 | 1586 | 6.3 | 7348 |
| Before 2 | 1461 | 14 | 268 | 551 | 961 | 4.6 | 5263 |
| After 1 | 2651 | 26 | 504 | 1067 | 2083 | 9.1 | 9146 |
| After 2 | 2621 | 25 | 493 | 1079 | 2010 | 9.5 | 9020 |
| Bottom ash - site 1 | | | | | | | |
| Before 1 | 29580 | <1 | 3323 | 58130 | 52 | 464 | 3505 |
| Before 2 | 17830 | <1 | 2093 | 26510 | 45 | 470 | 1590 |
| After | 23360 | <1 | 2821 | 44150 | 44 | 549 | 2242 |
| Bottom ash - site 2 | | | | | | | |
| Before 1 | 16910 | 15 | 5748 | 25570 | 81 | 1306 | 363 |
| Before 2 | 14340 | 13 | 2220 | 35200 | 55 | 3221 | 775 |
| Bottom ash - site 3 | | | | | | | |
| Before 1 | 39200 | 1.9 | 11620 | 85780 | 787 | 66 | 74 |
| Before 2 | 37750 | 1.7 | 8909 | 114500 | 2436 | 60 | 187 |
| After 1 | 46910 | 2.5 | 20470 | 53300 | 2453 | 127 | 5871 |
| After 2 | 38900 | 2.8 | 11900 | 47470 | 1541 | 95 | 4690 |
| After 3 | 56170 | 2.1 | 6284 | 99400 | 5873 | 343 | 4939 |
| After 4 | 47460 | 1.6 | 4792 | 87060 | 666 | 105 | 3668 |
| After 5 | 44620 | 3.0 | 8201 | 69140 | 591 | 52 | 5139 |
| Bottom ash - site 4 | | | | | | | |
| Before 1 | 18200 | 5.2 | 1412 | 46200 | 543.5 | 108.7 | 1774 |
| Before 2 | 18800 | 5.5 | 2449 | 46300 | 2672 | 268.2 | 2931 |
| Ash after 1 | 18500 | 5.4 | 2910 | 53800 | 1838 | 140 | 1860 |
| Ash after 2 | 16000 | 4.8 | 1707 | 44100 | 970.5 | 185.2 | 1812 |
| Ash after 3 | 31100 | 9.4 | 3346 | 62800 | 8893 | 211.3 | 4748 |
| Ash after 4 | 38200 | 7.2 | 4202 | 82700 | 1476 | 311.9 | 3304 |
| Bottom ash - site 5 | | | | | | | |
| Ash before | 16970 | 3.2 | 785.1 | 46610 | 763.8 | 47.7 | 584.7 |
| Ash after | 14590 | 4.4 | 2019 | 45670 | 218.8 | 219.9 | 634.6 |

### Sulphur content of the ash

The sulphide and sulphate content may provide an indication of reactions within the ash and the analyte 'Total Sulphur' has been shown to be the best indicator of hydrogen sulphide scrubbing. The data from bottom ash sampling is shown for comparison:

**Table 8: Sulphate, sulphide, and total sulphur content**

| | Sulphate | Sulphide | Total sulphur |
|---|---|---|---|
| | mg.kg⁻¹ | mg.kg⁻¹ | % ww |
| Fly ash | | | |
| Before - Sample 1 | 37760 | <10 | 1.54 |
| Before - Sample 2 | 45811 | <10 | 0.97 |
| After | 53763 | <10 | 2.18 |
| After | 54076 | <10 | 2.09 |
| Bottom ash - Site 1 | | | |
| Ash before | 7040 | <0.5 | Not analysed |
| Ash after | 8930 | <0.5 | Not analysed |
| Bottom ash - Site 2 | | | |
| Sample A | 24400 | 4.76 | Not analysed |
| Sample B | 27800 | 5.48 | Not analysed |

There is more sulphur, likely in the form of sulphate in fly ash than there is in bottom ashes. The amount of sulphate appears to increase after the trial, but the variation is within the variation of the "before" samples. There is no discernible difference between sulphide concentrations before and after the trial.

In previous trials the total sulphur measurement has appeared to offer a better picture of the amount of sulphur being adsorbed in the long term. There is possibly a 0.6 - 1 % increase in total sulphur after the trial.

In a cartridge there is 0.002m² cross sectional area and filled length of 0.5m = 0.001m³ of ash. At a density of 1.11Mg.m⁻³ this equates to 1.11Kg. The amount of total sulphur before the trial was ~1.5%, so before the trial there was 16.7g of sulphur in a cartridge. After the trial there would be ~2.1% x 1.11kg = 23.3g. This is an increase of 6.6g.

If a mole of gas at 25°C is 24.45 L, the 2.5L of hydrogen sulphide removed in the 1000L/min cartridge (Section 4.4) is 0.1 moles. One mole of hydrogen sulphide (H₂S) has a mass of 34.08g. The mass of hydrogen sulphide removed is therefore 3.48g. Sulphur makes up 32 g of the 34g molecular mass (94%), so the mass of extra sulphur in the tube should be ~3.3g after the trial.

The two independent methods of assessing sulphur removal appear to predict the same magnitude amount of sulphur removal. The total sulphur analysis appears to be the most useful.

### Carbonate content of the ash

At the end of the trial there was no indication of cementation of the ash, that was as loose and friable as it was before the trial. No long term trend of carbon dioxide removal is discernable. In terms of the ash carbonate content, the following table shows the difference between the 'ash before' and 'ash after' samples.

**Table 9: Fly ash carbonate content**

| | Carbonate | Fraction organic carbon f_{oc} |
|---|---|---|
| | % CaCO₃ | % |
| Fly Ash | | |
| Before 1 | 42.42 | 0.011 |
| Before 2 | 43.92 | 0.011 |
| After | 5.46 | 0.005 |
| After | 8.03 | 0.008 |
| Bottom Ash - Site 1 | | |
| Before 1 | 2.0 | 0.002 |
| Before 2 | 0.25 | <0.001 |
| After | <0.01 | 0.001 |
| Bottom Ash - Site 2 | | |
| Before 1 | 0.013 | <0.001 |
| Before 2 | <0.01 | <0.001 |
| | | |
| | Carbonate | Fraction organic carbon f_{oc} |
| | % CaCO₃ | % |
| Bottom Ash - Site 3 | | |
| Before 1 | 3.57 | 0.012 |
| Before 2 | 1.26 | 0.019 |
| After 1 | 1.45 | 0.014 |
| After 2 | 1.23 | 0.020 |
| After 3 | 3.26 | 0.016 |
| After 4 | 1.16 | 0.024 |
| After 5 | 4.77 | 0.022 |
| Bottom Ash - Site 4 | | |
| Before 1 | 17 | 0.9 |
| Before 2 | 18 | 0.74 |
| Ash after 1 | 15 | 0.85 |
| Ash after 2 | 17 | 0.95 |
| Ash after 3 | 16 | 1.14 |
| Ash after 4 | 16 | 1.02 |
| Bottom Ash - Site 5 | | |
| Ash before | 15 | 0.43 |
| Ash after | 20 | 0.85 |
| Bottom Ash - Site 6 | | |
| Sample A | 4.76 | 0.54 |
| Sample B | 5.48 | 0.99 |

There is a lot more carbonate in the 'before' fly ash samples than in bottom ashes. There is a similar amount of 'faction of organic carbon' as bottom ash from Site 3. The fact that the bottom ashes do not remove trace components suggests that the organic carbon in fly ash is more available for sorption reactions. It is also noted that the carbonate in the 'after" fly ash sample is an order of magnitude lower than the before sample.

### Leachate data

The soluble metal data was obtained by the BS12457-3, 2-stage leachate test that is designed to mirror conditions in a landfill. The leachate data are summarised below. In the 2:1 eluate the leachability of the copper and lead has increased. The leachability of the other metals has not changed.

**Table 10: 2:1 leachable metals concentrations**

| | Nickel (Dissolved ) | Copper (Dissolved ) | Lead (Dissolved ) | Zinc (Dissolved ) | Arsenic (Dissolved ) | Aluminium (Dissolved ) | Iron (Dissolved) |
|---|---|---|---|---|---|---|---|
| | mg/kg | mg/kg | mg/kg | mg/kg | mg/kg | mg/kg | mg/kg |
| Fly ash | | | | | | | |
| Before 1 | <0.006 | 2.99 | 657 | 5.01 | 0.06 | <0.06 | <0.02 |
| Before 2 | <0.006 | 3.72 | 739 | 5.29 | 0.07 | <0.06 | <0.02 |
| After | <0.006 | 4.54 | 844 | 5.16 | 0.07 | <0.06 | <0.02 |
| After | <0.006 | 4.69 | 869 | 4.59 | 0.07 | <0.06 | <0.1 |

**Table 11: 10:1 leachable metals concentrations**

| | Nickel | Copper | Lead | Zinc | Arsenic | Aluminium | Iron |
|---|---|---|---|---|---|---|---|
| | (Dissolved) | (Dissolved) | (Dissolved) | (Dissolved) | (Dissolved) | (Dissolved) | (Dissolved) |
| | mg/kg | mg/kg | mg/kg | mg/kg | mg/kg | mg/kg | mg/kg |
| Fly ash | | | | | | | |
| Before 1 | <0.03 | 3.05 | 658 | 10.58 | 0.11 | <0.3 | <0.1 |
| Before 2 | <0.03 | 3.78 | 742 | 12.86 | 0.11 | <0.3 | <0.1 |
| After | <0.03 | 4.58 | 848 | 7.66 | 0.12 | <0.3 | <0.1 |
| After | <0.03 | 4.86 | 871 | 8.05 | 0.13 | <0.3 | <0.1 |
| | | | | | | | |
| Bottom ash - Site 1 | | | | | | | |
| Before 1 | <0.06 | 0.27 | <0.09 | <0.2 | 0.05 | 21.83 | <0.13 |
| Before 2 | <0.04 | 0.32 | <0.09 | <0.2 | 0.03 | 22.54 | <0.1 |
| After | 0.67 | 0.15 | <0.09 | <0.2 | 0.21 | 1.43 | <0.1 |
| Bottom ash - Site 2 | | | | | | | |
| Before 1 | <0.03 | <0.04 | <0.03 | <0.20 | 0.13 | 149.75 | <0.13 |
| Before 2 | <0.03 | <0.04 | <0.03 | <0.20 | 1.02 | 109.62 | <0.13 |
| After 5 | <0.03 | <0.04 | <0.03 | <0.20 | 0.36 | 79.0 | <0.11 |
| Bottom ash - Site 3 | | | | | | | |
| Before 1 | 0.27 | 16.79 | 2.11 | 1.20 | <0.01 | 3.08 | <0.10 |
| Before 2 | 0.32 | 16.62 | 1.26 | 1.33 | <0.01 | 1.52 | <0.10 |
| After 1 | 0.99 | 0.20 | <0.09 | 0.60 | 0.13 | 1.29 | 0.10 |
| After 2 | 1.24 | 0.26 | <0.09 | <0.31 | 0.06 | 0.93 | <0.10 |
| After 3 | 0.92 | 0.22 | <0.09 | 0.39 | 0.04 | 2.21 | <0.09 |
| After 4 | 1.0 | 0.42 | <0.09 | 1.52 | <0.01 | 1.75 | <0.10 |
| After 5 | 0.66 | 2.37 | <0.09 | 0.72 | <0.01 | 4.69 | <0.10 |
| Bottom ash - Site 4 | | | | | | | |
| Before 1 | 0.23 | 10.94 | 5.53 | 3.44 | 0.04 | 2.0 | 0.4 |
| Before 2 | 0.21 | 12.06 | 16.23 | 4.99 | 0.03 | 1.7 | 0.2 |
| After 5 days | | | | | | | |
| Ash after 1 | 0.11 | 3.58 | 0.02 | 0.15 | 0.03 | 83.5 | 1.6 |
| Ash after 2 | 0.15 | 4.45 | <0.01 | 0.09 | 0.03 | 47.8 | 0.4 |
| After 37 days | | | | | | | |
| Ash after 3 | 0.26 | 2.28 | 0.04 | 1.56 | 0.07 | 3.28 | 1.52 |
| Ash after 4 | 0.51 | 1.52 | 0.06 | 1.89 | 0.15 | 3.37 | 1.66 |
| Bottom ash - Site 5 | | | | | | | |
| Ash before | 0.11 | 6.12 | 4.62 | 1.65 | 0.02 | 2.4 | 0.2 |
| Ash after | 0.08 | 3.73 | 0.12 | 0.15 | 0.02 | 21.1 | 0.2 |
| Bottom ash - Site 6 | | | | | | | |
| Sample A | 0.15 | 11.07 | 35.775 | 9.22 | 0.04 | 2.03 | |
| Sample B | 0.16 | 14.78 | 79.396 | 11.85 | 0.03 | 2.49 | |

The leaching characteristics suggest that the zinc is the active metal in hydrogen sulphide scrubbing, with some input from copper and lead. Zinc was the only metal with a marked difference between the 2:1 and 10:1 leachate in the 'after trial' sample. The leachability of the zinc decreased after the trial. Overall, in the 10:1 results the leachability of the copper and lead has increased slightly. The leachability of the zinc has decreased. The leachable iron and aluminium has not changed. In the fly ash trial, there was no difference with aluminium and zinc showing the biggest change, followed by copper and lead.

### Estimated scrubbing efficiencies

The table below the efficiency of each ash has been estimated and demonstrates that the fly ash has a similar or better performance to bottom ashes. The data available are: Amount of hydrogen sulphide scrubbed over a time period by a known volume of ash at a known flow rate. These results have been up-scaled to 1 m³ of ash, with the same factor applied to the amount of hydrogen sulphide scrubbed and the flow rate. A factor has then been applied to the hydrogen sulphide scrubbed and flow rate number to normalise the flow rate to 1m³.min⁻¹ and then a further factor has been applied to bring the amount of hydrogen scrubbed to the equivalent of 1 day.

The 400ml/min Cartridge with 0.001m³ of ash removed 0.0025m³ of hydrogen sulphide from 0.0004m³.min⁻¹ of landfill gas in 6 days. Assuming the performance of the ash is similar at higher volumes, 6.3m³ of hydrogen sulphide would be removed in 6 days from 1 m³.min⁻¹ of landfill gas by 1m³ of ash. Therefore 1.0m³ of hydrogen sulphide would be removed in 1 day from 1 m³.min⁻¹ of landfill gas by 1m³ of ash at a residence time of 30 seconds.

**Table 12: Summary of different ash scrubbing efficiencies**

| | Length of trial | Residence time | Removal rate (m³ of H2S removed per day per m³.min⁻¹ of LFG per 1m³ of ash) |
|---|---|---|---|
| Fly ash | 6 days | 30 | 1.0 |
| Site 1 - Wet Bottom ash Cartridge 5 | 7 days | 25 | 0.5 |
| Site 1 - Wet Bottom ash Cartridge 4 | 7 days | 41.5 | 2.0 |
| Site 1 - Wet Bottom ash Cartridge 3 | 7 days | 62.5 | 0.8 |
| Site 1 - Wet Bottom ash Cartridge 2 | 7 days | 125 | 0.4 |
| Site 1 - Wet Bottom ash Cartridge 1 | 7 days | 250 | 0.2 |
| Site 2 - Bottom ash | 4 hours | 9 seconds | 0.55 |
| Site 2 - Bottom ash | 37 days | 22 seconds | 0.53 |
| Site 1 - Dry Bottom ash Cartridge 5 | 4 days | 8.5 | 0.071 |
| Site 1 - Dry Bottom ash Cartridge 4 | 4 days | 17 | 0.086 |
| Site 1 - Dry Bottom ash Cartridge 3 | 4 days | 34 | 0.10 |
| Site 1 - Dry Bottom ash Cartridge 2 | 4 days | 68 | 0.16 |
| Site 1 - Dry Bottom ash Cartridge 1 | 4 days | 170 | 0.13 |
| Site 3 - Bottom ash Cartridge 1 | 6 days | 11 seconds | 0.21 |
| Site 3 - Bottom ash Cartridge 2 | 6 days | 16.5 seconds | 0.27 |
| Site 3 - Bottom ash Cartridge 3 | 6 days | 22 seconds | 0.46 |
| Site 3 - Bottom ash Cartridge 4 | 6 days | 44 seconds | 0.46 |
| Site 3 - Bottom ash Cartridge 5 | 6 days | 110 seconds | 0.62 |

## Claims

1. Use of fly ash for the removal of siloxanes from biogas, comprising the step of contacting the biogas with the fly ash.

2. The use according to claim 1, wherein the fly ash is fly ash collected through an Air Pollution Control system.

3. The use according to claim 1, wherein the fly ash is in the form of granules.

4. The use according to claim 3, wherein the fly ash is dry compacted fly ash.

5. The use according to claim 3 or 4, wherein the granules have an average diameter of from 0.5 mm to 50 mm.

6. The use according to any one of claims 3 to 5, wherein the granules further comprise a binder.

## Patentansprüche

1. Verwendung von Flugasche zum Entfernen von Siloxanen aus Biogas, umfassend den Schritt des in Kontakt Bringens des Biogases mit der Flugasche.

2. Verwendung nach Anspruch 1, wobei die Flugasche Flugasche ist, die durch ein Luftreinhaltungssystem erfasst wird.

3. Verwendung nach Anspruch 1, wobei die Flugasche die Form von Körnchen hat.

4. Verwendung nach Anspruch 3, wobei die Flugasche trockene, verdichtete Flugasche ist.

5. Verwendung nach Anspruch 3 oder 4, wobei die Körnchen einen durchschnittlichen Durchmesser von 0,5 mm bis 50 mm haben.

6. Verwendung nach einem der Ansprüche 3 bis 5, wobei die Körnchen ferner ein Bindemittel umfassen.

## Revendications

1. Utilisation des cendres volantes pour l'élimination des siloxanes du biogaz, comportant l'étape comprenant de mettre en contact le biogaz avec les cendres volantes.

2. Utilisation selon la revendication 1, dans laquelle les cendres volantes sont collectées par l'intermédiaire d'un Système de Contrôle de la Pollution de l'Air.

3. Utilisation selon la revendication 1, dans laquelle les cendres volantes se trouvent sous la forme de granules.

4. Utilisation selon la revendication 3, dans laquelle les cendres volantes sont des cendres volantes compactées à sec.

5. Utilisation selon la revendication 3 ou 4, dans laquelle les granules présentent un diamètre moyen allant de 0,5 mm à 50 mm.

6. Utilisation selon l'une quelconque des revendications 3 à 5, dans laquelle les granules comportent, de plus, un liant.
